(19) Europäisches Patentamt / European Patent Office / Office européen des brevets

(11) **EP 4 400 806 B1**

(12) **EUROPEAN PATENT SPECIFICATION**

(45) Date of publication and mention
of the grant of the patent:
**17.06.2026   Bulletin 2026/25**

(21) Application number: **22872584.2**

(22) Date of filing: **10.08.2022**

(51) International Patent Classification (IPC):
**G01B 11/24** $^{(2006.01)}$

(52) Cooperative Patent Classification (CPC):
**G01B 11/2433;** G01B 2210/56

(86) International application number:
**PCT/JP2022/030521**

(87) International publication number:
**WO 2023/047828 (30.03.2023 Gazette 2023/13)**

(54) **SHAPE MEASURING DEVICE**

FORMMESSVORRICHTUNG

DISPOSITIF DE MESURE DE FORME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **27.09.2021   JP 2021157114**

(43) Date of publication of application:
**17.07.2024   Bulletin 2024/29**

(73) Proprietors:
• **KABUSHIKI KAISHA KOBE SEIKO SHO (KOBE
STEEL, LTD.)
Hyogo 651-8585 (JP)**
• **Kobelco Research Institute, Inc.
Kobe-shi, Hyogo 651-0073 (JP)**

(72) Inventors:
• **NISHIYAMA, Kohei
Nishi-ku, Kobe-shi, Hyogo 651-2271 (JP)**
• **KAWARADA, Takao
Nishi-ku, Kobe-shi, Hyogo 651-2271 (JP)**
• **FURUTA, Yohei
Nishi-ku, Kobe-shi, Hyogo 651-2271 (JP)**

(74) Representative: **Müller-Boré & Partner
Patentanwälte PartG mbB
Friedenheimer Brücke 21
80639 München (DE)**

(56) References cited:
JP-A- 2005 114 499     JP-A- 2014 153 287
JP-A- S6 217 630       JP-A- S62 294 903
JP-B2- 4 500 157

## Description

### Technical Field

The present invention relates to a shape measuring device comprising an imaging optical system that irradiates an image sensor with parallel light through an object to be measured and measures a two-dimensional shape of the object to be measured by an image of the object to be measured projected onto the image sensor.

### Background Art

An optical system for a shape measuring device used in a shape measuring device that irradiates an image sensor with parallel light over an object to be measured and measures a two-dimensional shape of the object to be measured by an image of the object to be measured projected onto the image sensor is disclosed in Patent Literature 1, for example.

The optical system for a shape measuring device disclosed in this Patent Literature 1 includes: a parallel light irradiation system that irradiates, with parallel light, a portion to be measured that is an outer peripheral end edge portion of an object to be measured having a disk shape along a circular surface of the object to be measured such that the portion to be measured of the object to be measured is disposed in a light flux; and an imaging optical system that images the portion to be measured, in which the parallel light irradiation system includes a point light source having a white LED, a collimator lens for causing light from the point light source to be incident to form parallel light, and a telecentric lens having a both side or object side telecentric structure to be irradiated with light from the collimator lens through the object to be measured, and the imaging optical system includes an image sensor onto which an image of the portion to be measured, the image by light passing through the telecentric lens is projected.

With the optical system for a shape measuring device disclosed in Patent Literature 1, when a white LED having high brightness is used, brightness unevenness occurs in light after passing through a pinhole due to the directivity, and as a result, there is a possibility that distortion occurs in a contour shape of an outer peripheral end edge portion of the object to be measured.

JP 2005-114499 A describes an inspection device for a die coat bead that is used for observing the cross section shape of a bead in a die coat. The inspection device for a die coat bead comprises a lighting part for lighting by parallel light from one end of a side face of the bead, a high-speed camera for imaging the cross section shape of the bead from the other end, an image processing part for processing an image obtained by imaging the cross section shape of the bead, and a determination part for determining the cross section shape of the bead.

### Citation List

### Patent Literature

Patent Literature 1: Japanese Patent No. 4500157

### Summary of Invention

The present invention is an invention that has been made in view of the above circumstances, and an object of the present invention is to provide a shape measuring device comprising an imaging optical system that can reduce brightness unevenness.

The object of the present invention is solved by a shape measuring device having the features of the independent claim. Additional embodiments are defined in the dependent claims.

The above and other objects, features, and advantages of the present invention will be apparent from the following detailed description and accompanying drawings.

### Brief Description of Drawings

FIG. 1 is a schematic view for describing a configuration of an optical system for a shape measuring device according to an embodiment.
FIG. 2 is a view for describing a calculation method of a brightness distribution.
FIG. 3 is a schematic view for describing a configuration of a point light source of a modification used in the optical system for a shape measuring device.

**Description of Embodiments**

Hereinafter, one or a plurality of embodiments of the present invention will be described with reference to the drawings. However, the scope of the invention is not limited to the disclosed embodiments. Note that in the drawings, the same reference signs denote the same components, and description thereof will be appropriately omitted. In the present description, when components are collectively referred to, the components will be denoted by reference signs with suffixes omitted, and when components are individually referred to, the components will be denoted by reference signs with suffixes.

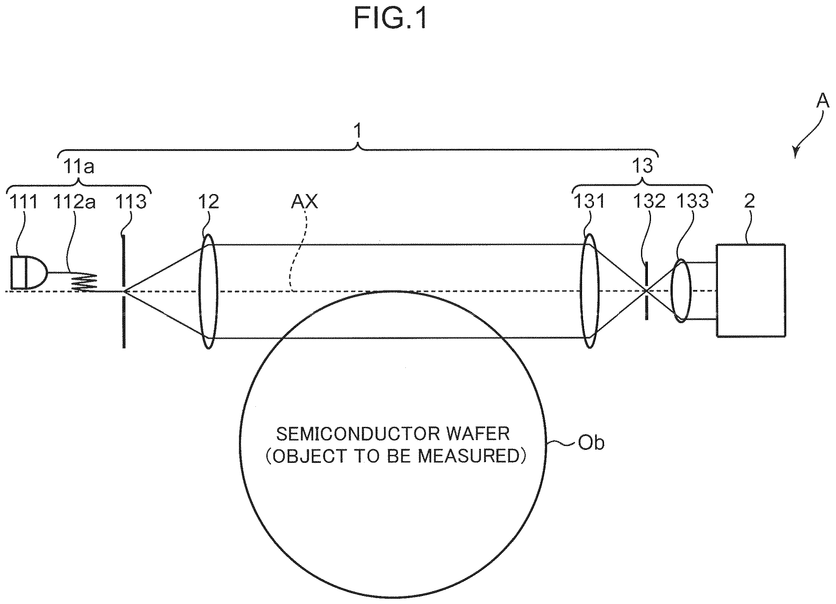

FIG. 1 is a schematic view for describing the configuration of an optical system for a shape measuring device according to an embodiment. An optical system A for a shape measuring device in the embodiment is an optical system used in a shape measuring device that irradiates an image sensor with parallel light through an object to be measured and measures a two-dimensional shape of an object Ob to be measured by an image of the object Ob to be measured projected on the image sensor, and, for example, as illustrated in FIG. 1, the optical system A includes a parallel light irradiation system 1 that irradiates, with parallel light, a portion to be measured that is an outer peripheral end edge portion of the object Ob to be measured having a disk shape along a circular surface of the object Ob to be measured such that the portion to be measured of the object Ob to be measured is disposed in a light flux, and an imaging optical system 2 that images the portion to be measured.

The object Ob to be measured may be any member as long as it is a member having a disk shape, and is, for example, a semiconductor wafer, a substrate of a hard disk (an aluminum substrate or a glass substrate), or the like.

The parallel light irradiation system 1 includes a point light source 11a, a collimator lens 12, and a telecentric lens 13.

The point light source 11a includes an LED 111 (light emitting diode) 111, a diffusion member 112 (e.g., an optical fiber 112a), and a pinhole member 113.

The LED 111 is a light source that emits light.

The diffusion member 112 is a member that diffuses and emits light from the LED 111, and, in the example illustrated in FIG. 1, is the optical fiber 112a as an example. The optical fiber 112a propagates and emits light from the LED 111 by repeating reflection in its core. By this repeat of reflection, the light from the LED 111 is diffused. Because the optical fiber can reflect more as compared with a case where it has a linear shape, the optical fiber 112a preferably has a bent shape, and in the example illustrated in FIG. 1, the optical fiber 112a has a wound shape (coil shape). The diameter and the number of turns of the coil shape in the optical fiber 112a having been wound are suitably set in accordance with required light diffusion, and in an example, the number of turns is 3 or more with a radius of about 50 mm. The optical fiber 112a may be made of glass, for example, or may be made of resin, for example, and the material thereof is not particularly limited.

The pinhole member 113 is a plate shaped member that shields white light emitted from the LED 111, and the plate shaped member has a pinhole of a through opening into which light from the diffusion member 112 (the optical fiber 112a in this example) is incident. The diameter of the pinhole is preferably as small as possible; however, too small diameter does not allow an amount of light sufficient for shape measurement to be obtained. Therefore, the diameter is preferably within a range of 1 $\mu$m to 1 mm, and more preferably within a range of 10 $\mu$m to 800 $\mu$m.

The diameter of the optical fiber 112a is preferably identical to the diameter of the pinhole and is therefore preferably within the range of 1 $\mu$m to 1 mm, more preferably within the range of 10 $\mu$m to 800 $\mu$m.

In the point light source 11a having such configuration, white light from the LED 111 is incident on the optical fiber 112a, propagates through repeated reflection in the core of the optical fiber 112a, is emitted from the optical fiber 112a, and is incident on the pinhole of the pinhole member 113.

The collimator lens 12 is an optical system (including a single lens and a lens group) that emits light from the point light source 11a as parallel light (parallel light flux). The collimator lens 12 and the pinhole member 113 are disposed such that the pinhole of the pinhole member 113 is positioned at a focal position of the collimator lens 12.

The telecentric lens 13 is an optical system having a both side or object side telecentric structure to be irradiated with light from the collimator lens 12 through the object Ob to be measured. In the example illustrated in FIG. 1, the telecentric lens 13 is an optical system having a both side telecentric structure, and configured to have two lenses 131 and 133 array with a back focal point of the first lens (including a lens group) 131 and a front focal point of the second lens (including a lens group) 133 being coincident with each other, and to include a variable diaphragm (aperture diaphragm) 132 at this focal position. In this telecentric lens 13, a principal ray is parallel to an optical axis AX on both an object side (object Ob to be measured side) and an image side (imaging optical system 2 side), and only parallel light (including light extremely close to parallel) of the light after passing through the object Ob to be measured is allowed to pass through. An interval distance between the collimator lens 12 and the first lens 131 is set to about 200 mm, for example, and the object Ob to be measured is disposed in a parallel light flux from the collimator lens 12 to the first lens 131. In order to suitably measure the shape of the portion to be measured that is an outer peripheral end edge portion of the object to be measured, the object Ob to be measured is preferably disposed such that front and back surfaces of the object Ob to be measured become parallel to the optical axis AX.

Note that in order to pass only parallel light (including light extremely close to parallel) of the light after passing through the object Ob to be measured, the telecentric lens 13 may be an optical system having an object side telecentric structure in which the principal ray becomes parallel to the optical axis only on the object side (object Ob to be measured side) in place of the optical system having the both side telecentric structure described above. In the case of this object side telecentric structure, a general image forming lens is used as the second lens on the back side of the diaphragm.

The imaging optical system 2 includes an image sensor on which an image of the portion to be measured, which is the outer peripheral end edge portion of the object Ob to be measured, is projected by the light passing through the telecentric lens 13. The image sensor is, for example, a two-dimensional CCD image sensor, a two-dimensional CMOS image sensor, or the like.

In the parallel light irradiation system 1 having the above configuration, in order to more favorably form, on the image sensor of the imaging optical system 2, an image of the outer peripheral end edge portion of the object Ob to be measured, it is preferable to emit the parallel light so that the brightness distribution of the light irradiated to the image sensor becomes equal to or less than 25% in a case where the object Ob to be measured is not disposed, and it is more preferable to emit the parallel light so that the brightness distribution becomes equal to or less than 20%. The shape measuring measurement device is optimized on an assumption that no brightness distribution exists, and therefore a smaller brightness distribution is better. However, for further improvement, it is effective to reduce a pinhole diameter and a fiber diameter to get close to a more ideal point light source, but a reduced diameter reduces the amount of incident light, which is not suitable for measurement. When the voltage is increased for obtaining a necessary amount of light, there is a possibility that a disadvantage such as shortening of the life of the LED 111 occurs.

The shape measuring device including the optical system A for a shape measuring device having such configuration measures the shape of the outer peripheral end edge portion of the object Ob to be measured by applying predetermined image processing such as edge extraction processing of extracting an edge to an image (image data) obtained by capturing an image of the outer peripheral end edge portion of the object Ob to be measured output from the image sensor of the imaging optical system 2 and thereby extracting an outer contour in the outer peripheral end edge portion of the object Ob to be measured.

Since the optical system A for a shape measuring device in the present embodiment, by including the point light source 11a, can emit, through the object to be measured, parallel light as close to perfect as possible through the collimator lens 12, and, by the telecentric lens 13, can pass only parallel light (including light extremely close to parallel) of the light after passing through the object to be measured, the optical system A can obtain an image of a good outer peripheral end edge portion of the object Ob to be measured having a small degree of blurring of the contour in the image sensor of the imaging optical system 2, even if the object Ob to be measured has a long depth length along the optical axis direction. Therefore, even if the object Ob to be measured is, for example, a semiconductor wafer having a long depth length along the optical axis direction, the degree of blurring of the contour is small in the image sensor of the imaging optical system 2, and a good image of the outer peripheral end edge portion of the semiconductor wafer can be captured.

Since the optical system A for a shape measuring device in the present embodiment diffuses light from the LED 111 by the diffusion member 112, that is, the optical fiber 112a in the above-described example, before causing the light to enter the pinhole, the optical system A can reduce brightness unevenness.

According to the present embodiment, it is possible to provide the optical system A for a shape measuring device in which the diffusion member is an optical fiber.

In the optical system A for a shape measuring device in the present embodiment, since the optical fiber 112a has a bent shape, more light is reflected as compared with a case where the optical fiber has a linear shape and light propagates in the core, therefore light can be more suitably diffused and brightness unevenness can be further reduced.

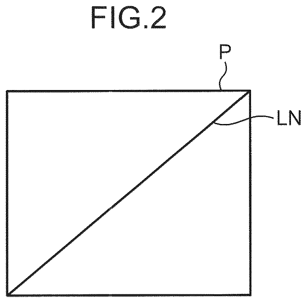

Next, an example and a comparative example will be described. FIG. 2 is a view for describing the calculation method of the brightness distribution.

The LED 111 was used for the point light source 11a of the optical system for a shape measuring device in the example, an optical fiber wound three times into a coil shape with a radius of 50 mm was used for the diffusion member 112, and a plate shaped member having pinhole of $\phi$ 400 $\mu$m was used for the pinhole member 113. The surface emitting LED is configured to include an InGaN-based blue LED and a yellow phosphor of YAG:Ce phosphor applied to a surface thereof. A collimator lens having a focal length f: 50 mm was used for the collimator lens 12, and an object side telecentric lens having an optical magnification of 2 times was used for the telecentric lens 13. A two-dimensional CMOS image sensor was used as an image sensor of the imaging optical system 2. The object side telecentric lens has a working distance (distance from a lens tip end to the object to be measured): about 110 mm.

On the other hand, the optical system for a shape measuring device in the comparative example has a configuration in which the diffusion member 112 (optical fiber 112a having a coil shape in the above-described example) is removed from the optical system for a shape measuring device in the above-described example.

The brightness distribution in the optical system for a shape measuring device of the example was 11%, and the brightness distribution in the optical system for a shape measuring device of the comparative example was 26%. Therefore, the optical system for a shape measuring device of the example is improved in terms of brightness unevenness as compared with the optical system for a shape measuring device of the comparative example.

As illustrated in FIG. 2 for example, in a case where the object Ob to be measured is not disposed in the optical system for a shape measuring device, the brightness distribution BD was obtained from the following Equation 1 using a maximum brightness Bmax and a minimum brightness Bmin at a diagonal line LN in an image P by light with which the image sensor of the imaging optical system 2 was irradiated.

$$\text{Equation 1: BD} = (1 - \text{Bmin/Bmax}) \times 100 \, [\%]$$

Note that in the above-described embodiment, the diffusion member 112 is the optical fiber 112a, but the diffusion member 112 may be an integrating sphere. According to this, it is possible to provide an optical system for a shape measuring device in which a diffusion member is an integrating sphere.

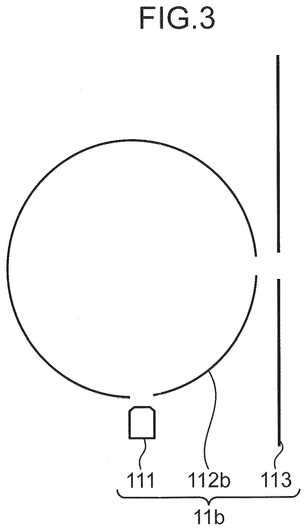

FIG. 3 is a schematic view for describing the configuration of a point light source of a modification used in the optical system for a shape measuring device.

The optical system A for a shape measuring device of such modification includes a point light source 11b illustrated in FIG. 3 in place of the point light source 11a in the above-described configuration. This point light source 11b illustrated in FIG. 3 includes the white LED 111, an integrating sphere 112b, and the pinhole member 113. Since the white LED 111 and the pinhole member 113 are similar to the white LED 111 and the pinhole member 113 described above with reference to FIG. 1, the description thereof will be omitted.

The integrating sphere 112b is a hollow sphere member, and includes an incident opening on which light from the white LED 111 is incident, and an emission opening through which light diffusely reflected inside the sphere member is emitted to the pinhole of the pinhole member 113. For efficient diffuse reflection, for example, magnesium oxide, barium oxide, zinc oxide, or the like is applied to an inner surface (inner wall surface) of the sphere member.

In the point light source 11b having such configuration, white light from the white LED 111 is incident on the integrating sphere 112b through an incident opening thereof, is diffusely reflected in the integrating sphere, and is incident on the pinhole of the pinhole member 113 through the emission opening from the integrating sphere 112b.

Note that the LED 111 may be disposed in the integrating sphere, and the incident opening may be omitted. In this case, a light shielding plate is provided between the LED 111 and the emission opening so that light from the LED 111 does not directly reach the emission opening.

The present description discloses various aspects of technique as described above, of which the main technique is summarized below.

An optical system for a shape measuring device according to an aspect includes: a parallel light irradiation system that irradiates, with parallel light, a portion to be measured that is an outer peripheral end edge portion of an object to be measured having a disk shape along a circular surface of the object to be measured such that the portion to be measured of the object to be measured is disposed in a light flux; and an imaging optical system that images the portion to be measured, in which the parallel light irradiation system includes a point light source, a collimator lens that emits light from the point light source as parallel light, and a telecentric lens having a both side or object side telecentric structure to be irradiated with light from the collimator lens through (over, across) the object to be measured, the imaging optical system includes an image sensor onto which an image of the portion to be measured, the image by light passing through the telecentric lens is projected, and the point light source includes an LED, a diffusion member that diffuses and emits light from the LED; and a pinhole member having a pinhole into which light from the diffusion member is incident. Preferably, in the optical system for a shape measuring device described above, the parallel light irradiation system emits the parallel light such that brightness distribution of the light with which the image sensor is irradiated becomes equal to or less than 25% (more preferably equal to or less than 20%) in a case where the object to be measured is not disposed.

Since such optical system for a shape measuring device diffuses light from the white LED by the diffusion member before causing the light to enter the pinhole, the optical system can reduce brightness unevenness.

In another aspect, in the optical system for a shape measuring device described above, the diffusion member is an optical fiber.

According to this, it is possible to provide an optical system for a shape measuring device in which the diffusion member is an optical fiber.

In another aspect, in the optical system for a shape measuring device described above, the optical fiber has a bent shape. Preferably, in the optical system for a shape measuring device described above, the optical fiber has a wound shape.

In such optical system for a shape measuring device, since the optical fiber has a bent shape, more light is reflected as compared with a case where the optical fiber has a linear shape and light propagates in the core, therefore light can be more suitably diffused and brightness unevenness can be further reduced.

In another aspect, in the optical system for a shape measuring device described above, the diffusion member is an integrating sphere.

According to this, it is possible to provide an optical system for a shape measuring device in which the diffusion member is an integrating sphere.

Although the present invention has been appropriately and sufficiently described through the embodiment with reference to the above drawings to express the present invention, it should be recognized that a person skilled in the art can easily change and/or improve the above-described embodiment.

**Industrial Applicability**

According to the present invention, it is possible to provide an optical system for a shape measuring device used in a shape measuring device that irradiates an image sensor with parallel light over an object to be measured and measures a two-dimensional shape of the object to be measured by an image of the object to be measured projected onto the image sensor.

**Claims**

1. A shape measuring device comprising:

   a parallel light irradiation system (1) that is configured to irradiate, with parallel light, a portion to be measured that is an outer peripheral end edge portion of an object (Ob) to be measured having a disk shape along a circular surface of the object (Ob) to be measured such that the portion to be measured of the object (Ob) to be measured is disposed in a light flux; and
   an imaging optical system (2) that is configured to image the portion to be measured,
   an image processing means configured to extract an edge to said image of the outer peripheral end edge portion of the object (Ob) to be measured,
   wherein the parallel light irradiation system (1) includes a point light source (11a), a collimator lens (12) that is configured to emit light from the point light source (11a) as parallel light, and a telecentric lens (13) having a both side or object side telecentric structure to be irradiated with light from the collimator lens (12) through the object (Ob) to be measured,
   the imaging optical system (2) includes an image sensor onto which an image of the portion to be measured, the image by light passing through the telecentric lens (13) is projected, and
   the point light source (11a) includes an **LED** (111), a diffusion member (112a, 112b) that is configured to diffuse and emits light from the **LED** (111); and a pinhole member (113) having a pinhole into which light from the diffusion member (112a, 112b) is incident.

2. The shape measuring device according to claim 1, wherein the diffusion member (112a, 112b) is an optical fiber (112a).

3. The shape measuring device according to claim 2, wherein the optical fiber (112a) has a bent shape.

4. The shape measuring device according to claim 1, wherein the diffusion member (112a, 112b) is an integrating sphere (112b).

**Patentansprüche**

1. Eine Formmessvorrichtung, umfassend:

   ein Parallellicht-Bestrahlungssystem (1), das dazu konfiguriert ist, einen zu messenden Abschnitt, der ein äußerer peripherer Endkantenabschnitt eines zu messenden Objekts (Ob) mit Scheibenform entlang einer Kreisfläche des zu messenden Objekts (Ob) ist, mit parallelem Licht zu bestrahlen, sodass der zu messende Abschnitt des zu messenden Objekts (Ob) in einem Lichtfluss angeordnet ist; und
   ein optisches Abbildungssystem (2), das dazu konfiguriert ist, den zu messenden Abschnitt abzubilden, sowie
   ein Bildverarbeitungsmittel, das dazu konfiguriert ist, eine Kante aus dem Bild des äußeren peripheren Endkantenabschnitts des zu messenden Objekts (Ob) zu extrahieren,
   wobei das Parallellicht-Bestrahlungssystem (1) Folgendes beinhaltet: eine Punktlichtquelle (11a), eine Kollimatorlinse (12), die dazu konfiguriert ist, Licht von der Punktlichtquelle (11a) als paralleles Licht auszusenden, und eine telezentrische Linse (13) mit einer beidseitigen oder objektseitigen telezentrischen Struktur, die mit Licht von der Kollimatorlinse (12) durch das zu messende Objekt (Ob) bestrahlt wird, wobei

das optisches Abbildungssystem (2) einen Bildsensor beinhaltet, auf den ein Bild des zu messenden Abschnitts projiziert wird, wobei das Bild durch Licht gebildet ist, das durch die telezentrische Linse (13) hindurchtritt, und wobei

die Punktlichtquelle (11a) Folgendes beinhaltet: eine LED (111), ein Diffusionselement (112a, 112b), das konfiguriert ist, um das von der LED (111) emittierte Licht zu diffundieren; und ein Lochblendenelement (113) mit einer Lochblende, in die Licht vom Diffusionselement (112a, 112b) einfällt.

2. Die Formmessvorrichtung nach Anspruch 1, wobei das Diffusionselement (112a, 112b) eine optische Faser (112a) ist.

3. Die Formmessvorrichtung nach Anspruch 2, wobei die optische Faser (112a) eine gebogene Form aufweist.

4. Die Formmessvorrichtung nach Anspruch 1, wobei das Diffusionselement (112a, 112b) eine Ulbrichtkugel (112b) ist.

**Revendications**

1. Un dispositif de mesure de forme comprenant :

un système d'irradiation par lumière parallèle (1) configuré pour irradier, avec de la lumière parallèle, une portion à mesurer qui est une portion de bord périphérique externe d'un objet (Ob) à mesurer présentant une forme de disque, le long d'une surface circulaire de l'objet (Ob) à mesurer, de manière que la portion à mesurer de l'objet (Ob) à mesurer soit disposée dans un flux lumineux ; et

un système optique d'imagerie (2) configuré pour imager la portion à mesurer,

un moyen de traitement d'image configuré pour extraire un bord de ladite image de la portion de bord périphérique externe de l'objet (Ob) à mesurer,

sachant que le système d'irradiation par lumière parallèle (1) inclut une source lumineuse ponctuelle (11a), une lentille collimatrice (12) configurée pour émettre la lumière provenant de la source lumineuse ponctuelle (11a) sous forme de lumière parallèle, et une lentille télécentrique (13) ayant une structure télécentrique des deux côtés ou du côté objet, destinée à être irradiée par la lumière provenant de la lentille collimatrice (12) à travers l'objet (Ob) à mesurer, que

le système optique d'imagerie (2) inclut un capteur d'image sur lequel est projetée une image de la portion à mesurer, ladite image étant formée par de la lumière passant à travers la lentille télécentrique (13), et que

la source lumineuse ponctuelle (11a) inclut une LED (111), un élément de diffusion (112a, 112b) configuré pour diffuser et émet de la lumière provenant de la LED (111) ; et un élément à micro-orifice (113) présentant un micro-orifice dans lequel de la lumière provenant de l'élément de diffusion (112a, 112b) est incidente.

2. Le dispositif de mesure de forme d'après la revendication 1, sachant que l'élément de diffusion (112a, 112b) est une fibre optique (112a).

3. Le dispositif de mesure de forme d'après la revendication 2, sachant que la fibre optique (112a) présente une forme courbée.

4. Le dispositif de mesure de forme d'après la revendication 1, sachant que l'élément de diffusion (112a, 112b) est une sphère d'intégration (112b).

# FIG.1

# FIG.2

# FIG.3

111    112b    113

11b

**EP 4 400 806 B1**

**REFERENCES CITED IN THE DESCRIPTION**

**Patent documents cited in the description**

- JP 2005114499 A
- JP 4500157 B